# EUROPEAN PATENT APPLICATION

(11) **EP 4 836 469 A1**
(43) Date of publication of application: **04.11.2026**
(21) Application number: 23962822.5
(22) Date of filing: 29.12.2023
(51) Int. Cl.: H04W 12/03

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); WANG, Huiming, Dongguan, Guangdong 523860 (CN); HUANG, Cuihe, Dongguan, Guangdong 523860 (CN); LI, Meng, Dongguan, Guangdong 523860 (CN); XU, Jing, Dongguan, Guangdong 523860 (CN)
(74) Representative: Penza, Giancarlo
(86) International application number: PCT/CN2023/143373
(87) International publication number: WO 2025/138148

(57) **Abstract**

The present application relates to a communication method and a device. The method comprises: receiving first information, wherein the first information is used for determining a mode of obtaining, on the basis of a shared key, a sequence generation parameter corresponding to a downlink sensing signal, and the shared key is shared by a first device and a second device.

## Description

### TECHNICAL FIELD

The present disclosure relates to the field of communication, and more particularly to a communication method and a communication device.

### BACKGROUND

In the related technologies, 3GPP technology has initiated the research on communication services integrated with sensing. In such sensing services provided in the scenario of integrated sensing and communication, a sensing signal may be sent by a terminal and/or a base station, and an echo signal of the sensing signal may be measured by a terminal for sensing and/or an access network devices for sensing, which can achieve the purpose of tracking and potentially identifying any target (sensing target) in the environment. However, in the aforementioned sensing scenario, how to ensure the security of the signal used for sensing, further to ensure the security of the entire sensing scenario, has become a problem that needs to be solved.

### SUMMARY

Embodiments of the present disclosure provide a communication method and a communication device.

A communication method is provided in an embodiment of the present disclosure. The communication method is performed by a first device, and includes the following operation.

First information is received. Herein, the first information is used to determine a manner of acquiring a sequence generation parameter corresponding to a downlink sensing signal based on a shared key, and the shared key is shared by the first device and a second device.

A first device is provided in an embodiment of the present disclosure. The first device includes a communication unit.

The communication unit is configured to receive first information. Herein, the first information is used to determine a manner of acquiring a sequence generation parameter corresponding to a downlink sensing signal based on a shared key, and the shared key is shared by the first device and a second device.

According to the aforementioned technical solutions, the first device is configured with the first information, based on the first information, the first device may be enabled to determine the manner of generating the sequence generation parameter of the downlink sensing signal by using the key shared by the first device and the second device. In such way, the parameter range of the sequence generation parameter of the downlink sensing signal can be changed, and only the first device and the second device can know the specific content of the sequence generation parameter, and other devices cannot acquire such parameter; additionally, only the receiving end of the first device and the second device can correctly receive and measure the downlink sensing signal generated based on the sequence generation parameter, thereby improving the security of the downlink sensing signal itself and ensuring the security of the sensing scenario.

### BRIEF DESCRIPTION OF THE DRAWINGS

FIG. 1 is a schematic diagram of an application scenario according to an embodiment of the present disclosure.
FIG. 2 is a schematic flowchart of a communication method according to an embodiment of the present disclosure.
FIG. 3 is a schematic scenario diagram of a modulation manner according to an embodiment of the present disclosure.
FIG. 4 is a schematic flowchart of a communication method in which a first device is a UE according to an embodiment of the present disclosure.
FIG. 5 is a schematic flowchart of a communication method in which a first device is a base station according to an embodiment of the present disclosure.
FIG. 6 is another schematic flowchart of a communication method in which a first device is a UE according to an embodiment of the present disclosure.
FIG. 7 is another schematic flowchart of a communication method in which a first device is a base station according to an embodiment of the present disclosure.
FIG. 8 is a schematic block diagram of a first device according to an embodiment of the present disclosure.

### DETAILED DESCRIPTION

The technical solutions of the embodiments of the present disclosure can be applied to various communication systems, such as a long term evolution (LTE), an advanced long term evolution (LTE-A), a new radio (NR), evolution of NR, a wireless local area network (WLAN), a wireless fidelity (WiFi), or other communication systems.

The embodiments of the present disclosure describe various embodiments in conjunction with a network device and a terminal. The terminal may be mobile or fixed, and the terminal may also be referred to as a mobile station, a user unit, etc. The terminal may be a station in a WLAN, and may be a terminal such as a smart terminal, a wireless modem, a laptop computer, a tablet computer, or the like. In an embodiment of the present disclosure, the terminal may be a virtual reality (VR) terminal/ augmented reality (AR) terminal, an industrial control terminal, an unmanned driving terminal, a telemedicine terminal, a smart grid terminal, a transportation security terminal, a smart city terminal, a wireless terminal of a smart home, etc. By way of example but not limitation, in the embodiments of the present disclosure, the terminal may also be a wearable device.

In an embodiment of the present disclosure, the network device may be a device for communicating with the terminal. The network device may be an access point in the WLAN, an evolved base station in LTE, a relay station, an in-vehicle device, a wearable device, a network device (gNB) in an NR network, a network device in a future evolved public land mobile network (PLMN) network, a network device in a non-terrestrial network, etc. By way of example but not limitation, in the embodiments of the present disclosure, the network device may have mobile characteristics, for example, the network device may be a mobile device.

In order to facilitate understanding of the technical solutions of the embodiments of the present disclosure, the related technologies of the embodiments of the present disclosure are described below. The following related technologies, as optional solutions, can be combined with the technical solutions of the embodiments of the present disclosure in any way, and all of them fall within the scope of protection of the embodiments of the present disclosure.

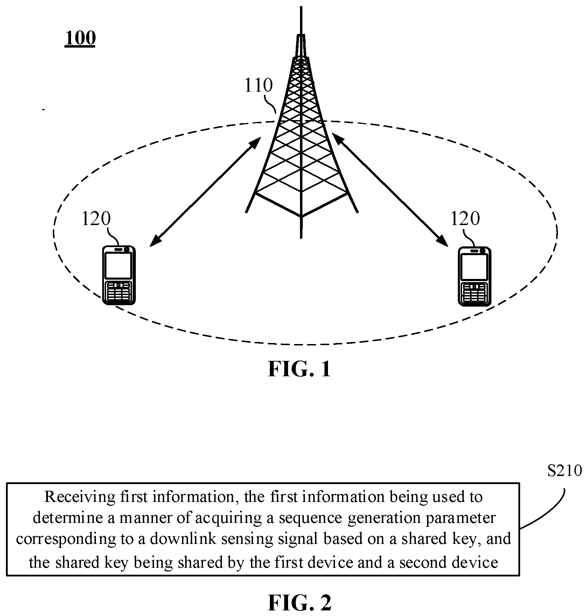

FIG. 1 exemplarily illustrates a communication system 100. The communication system includes a network device 110 and two terminals 120. In one possible implementation, the communication system 100 may include multiple network devices 110, and the coverage range of each network device 110 may include another number of terminals 120, which is not limited in the embodiments of the present disclosure. In one possible implementation, the communication system 100 may further include a mobility management entity, an access and mobility management function, and other network entities, which are not limited in the embodiments of the present disclosure. Herein, the network device may further include an access network device and a core network device. That is, the communication system may further include multiple core networks for communicating with the access network device. The access network device may be a base station in an LTE, LTE-A, or NR system. Taking the communication system illustrated in FIG. 1 as an example, the communication device may include a network device and a terminal that have the communication function. The communication device may further include other devices in the communication system, such as other network entities of a network controller and a mobility management entity, which are not limited in the embodiments of the present disclosure.

FIG. 2 is a schematic flowchart of a communication method performed by a first device according to an embodiment of the present disclosure. The method includes at least part of the following.

At block S210, first information is received. Herein, the first information is used to determine a manner of acquiring a sequence generation parameter corresponding to a downlink sensing signal based on a shared key, and the shared key is shared by the first device and a second device.

Optionally, the first device is an access network device that sends the downlink sensing signal; and the second device is a terminal that receives an echo signal of the downlink sensing signal.

Optionally, the first device is a terminal that receives an echo signal of the downlink sensing signal; and the second device is an access network device that sends the downlink sensing signal.

The access network device may include at least one of the following: a base station, a gNB, an eNB, a network device in a future evolved PLMN network, a network device in a non-terrestrial network (NTN) network, a satellite, etc.

The downlink sensing signal may be referred to as any one of a downlink sensing reference signal, a sensing reference signal, etc. For example, the downlink sensing reference signal may be one of a Positioning Reference Signal (PRS), a Demodulation Reference Signal (DM-RS), a Channel State Information Reference Signal (CSI-RS), etc. The specific types of all possible downlink sensing reference signals are not limited or exhaustively listed herein.

The echo signal of the downlink sensing signal may be referred to as the signal resulting from the reflection of the downlink sensing signal by a sensing target. In some possible examples, the echo signal of the downlink sensing signal may also be referred to as a reflected signal of the downlink sensing signal, or simply as an echo signal, or simply as a reflected signal. All possible names of the echo signal of the downlink sensing signal are not limited or exhaustively listed herein. In some possible examples, the sensing target may also be simply referred to as a target.

The shared key may alternatively be referred to as any one of a sensing key, a key for calculating a generation parameter of a sensing signal, a key for calculating a parameter, etc. The possible names of the shared key are not limited or exhaustively listed herein.

The sequence generation parameter corresponding to the downlink sensing signal may include a downlink PRS Sequence ID (dl-PRS-SequenceID) or simply referred to as a Sequence ID, e.g., which may be represented as ${n}_{ID , seq}^{PRS}$.

In some possible implementations, when the first device is the terminal and the second device is the access network device, the operation of the terminal receiving the first information may refer to receiving the first information from a Sensing Function (SF). When the first device is the access network device and the second device is the terminal, the operation of the access network device receiving the first information may refer to receiving the first information from the SF.

The first information may also be referred to as one of: sensing assistance data, sensing-related data, sensing-related assistance data, sensing configuration data, sensing-related configuration information, etc. The sensing function may also be referred to as a sensing server.

It should be understood that although the implementation mainly describes the acquisition of the first information by the first device, in the downlink sensing scenario, the first device and the second device (i.e., the terminal and the access network device) which serve as transceiving devices for each other, may receive the same first information. In other words, the second device may also perform the process of receiving the first information. Therefore, in the following description of the implementation, no distinction will be made between the first device and the second device. Instead, the explanations are provided separately for both sides of the transmission and reception in the downlink sensing scenario, namely the terminal and the access network device.

In one embodiment, the terminal may receive the first information from the SF by one of the following manner. The terminal directly receives the first information from the SF. The terminal receives the first information from the SF through the core network device. The terminal receives the first information from the SF through the access network device.

Exemplarily, before receiving the first information, the terminal may not send a first request message. In such case, the terminal may directly receive the first information.

For instance, the first information may be directly sent from the access network device to the terminal. For example, the access network device may send a second request message to the SF (or sends the second request message to the SF through the core network device). The second request message may be used to request to acquire the first information, that is, the second request message is also used to request to acquire the related assistance data required for subsequent transmission or generation of the downlink sensing signal. After the access network device receives the first information from the SF (or receives the first information from the SF through the core network device), the first information may be stored locally, and further directly sent to the terminal. In such case, the first information sent from the access network device to the terminal may be carried by any downlink AS message.

For instance, the SF and/or the core network device may send the first information to the terminal (or the SF may send the first information to the terminal through the core network device). The embodiments do not limit the reason for the SF side to be triggered for the transmission of the first information to the terminal.

On the terminal side, the role of the first information may be used for the terminal to acquire the sequence generation parameter of the downlink sensing signal, further to calculate a sensing sequence based on the sequence generation parameter, and demodulate the echo signal of the downlink sensing signal based on the sensing sequence. In other words, the first information may serve as the related assistance data, which is required for the terminal to acquire the subsequently demodulated echo signal of the downlink sensing signal. The related assistance data may include at least one of the following: assistance data related to an echo signal of the demodulated downlink sensing signal; assistance data related to generation of the downlink sensing signal; assistance data related to transmission of the downlink sensing signal, etc. The related assistance data may be represented as NR downlink PRS assistance data (NR-DL-PRS-AssistanceData).

Exemplarily, before receiving the first information, the operation of the terminal may further include: sending a first request message. The first request message may be used to request to acquire the first information, that is, to request to acquire the related assistance data required for the subsequent transmission or generation of the downlink sensing signal.

The operation of sending the first request message may include one of the following. The terminal directly sends the first request message to the SF. The terminal sends the first request message to the SF through the core network device. The terminal sends the first request message to the access network device.

Optionally, when the terminal directly sends the first request message to the SF, the terminal may directly receive the first information from the SF.

Optionally, when the terminal sends the first request message to the SF through the core network device, the terminal may receive the first information from the SF through the core network device. In such case, the first request message may be carried by any non-access network (Non-access stratum, NAS) message (uplink NAS message); and the first information may be carried by any one NAS message (downlink NAS message).

Optionally, when the terminal sends the first request message to the access network device, the access network device may forward the first request message to the SF; and accordingly, the access network device may receive the first information from the SF and send the first information to the terminal. Alternatively, the access network device may forward the first request message to the SF through the core network device; and accordingly, the access network device may receive the first information from the SF through the core network device, and send the first information to the terminal.

In such case, the first request message sent from the terminal to the access network device may be carried by any uplink access stratum (AS) message; and the first information sent from the access network device to the terminal may be carried by any downlink AS message.

In one embodiment, the first information received by the access network device from the SF may be one of the following. The access network device directly receives the first information from the SF. The access network device receives the first information from the SF through the core network device.

Exemplarily, before the access network device receives the first information from the SF, the process that may be performed by the access network device may be: sending a second request message to the SF. The second request message may be used to request to acquire the first information, that is, the second request message may also be used to request to acquire the related assistance data required for the subsequent transmission or generation of the downlink sensing signal.

The operation of the access network device sending the second request message may include one of the following. The access network device directly sends the second request message to the SF. The access network device sends the second request message to the SF through the core network device.

In such case, if the access network device and the terminal respectively request to acquire the first information from the SF, the access network device may locally store the first information and perform the subsequent process after receiving the first information, and does not need to send the first information to the terminal. If the access network device individually requests to acquire the first information from the SF, the access network device may locally store the first information after receiving the first information, and further sends the first information to the terminal.

Optionally, before the access network device receives the first information from the SF, the process that may be performed by the access network device may be: receiving a first request message from the first device (terminal), forwarding the first request message to the SF, or forwarding the first request message to the SF through the core network device. Accordingly, the access network device may receive the first information from the SF, locally store the first information, and further send the first information to the terminal. Alternatively, the second device may receive the first information from the SF through the core network device, locally store the first information, and further send the first information to the terminal. In such case, the first request message sent from the terminal to the access network device may be carried by any uplink AS message; and the first information sent by the access network device to the terminal may be carried by any downlink AS message.

Exemplarily, before receiving the first information, the access network device may not send the second request message. In such case, the access network device may directly receive the first information from the SF (or receive the first information from the SF through the core network device). The embodiments do not limit the reason for the SF side to be triggered for the transmission of the first information to the access network device.

On the access network device side, the role of the first information may be used for the access network device to acquire the sequence generation parameter of the downlink sensing signal, further to calculate the sensing sequence based on the sequence generation parameter, and then generate and send the downlink sensing signal based on the sensing sequence. In other words, the first information may serve as the related assistance data, which is required for the access network device to acquire the echo signal of the subsequently generated and transmitted downlink sensing signal. The related assistance data may include at least one of the following: assistance data related to generation of the downlink sensing signal; assistance data related to transmission of the downlink sensing signal; assistance data related to demodulation of the echo signal of the downlink sensing signal, etc.

In some possible implementations, the shared key may be one of the following: a first key shared by the first device and the second device, where the first key includes one of an access stratum key, an access stratum security base key, a next hop (NH) key, and a physical layer key; and, calculated based on the first key.

The access stratum key may include at least one of the following: a User Plane (UP) integrity protection (or verification) key K_{Upint}; an UP confidentiality key K_{UPenc}; a control plane integrity protection (or verification) key K_{RRCint}; or, a control plane confidentiality key K_{RRCenc}. The derivation manner of each access stratum key is not limited in the embodiments.

The Access Stratum (AS) security base key may be K_{gNB}. Exemplarily, the K_{gNB} may be an initial K_{gNB}, or a K_{NG-RAN} specified in the relevant protocol(s). Herein, K_{NG-RAN} may be alternatively represented as K_{NG-RAN}*, or alternatively represented as a non-initial key K_{gNB}. The derivation manner of the access stratum security base key is not limited in the embodiments.

The physical layer key may be generated based on the characteristics of the physical layer channel between the first device and the second device. The specific generation manner of the physical layer key is not limited the embodiments. Exemplarily, the physical layer key may be represented as Kphy.

It should be understood that the foregoing is only the exemplary description of the first key. In practical processing, the first key may also be a key generated or shared in other manners, and all possible types of keys that may be the first key are not limited or exhaustively listed herein.

Optionally, the first key used by the first device and the second device may be defaulted by both parties or specified in the protocol(s). For example, K_{NG-RAN} may be defaulted by the first device and the second device as the first key.

Optionally, the first device may determine the first key. The process of the first device may further include that: the first device sends an identification of the first key to the second. The process of the second device may further include: receiving the identification of the first key from the first device, and determining the first key based on the identification of the first key. For example, the identification of the first key may be the identification of K_{Upint}, that is, K_{Upint} may be determined as the first key.

Optionally, the second device may determine the first key. The process of the second device may further include: sending the identification of the first key to the first device. The process of the first device may further include: receiving the identification of the first key from the second device, and determining the first key based on the identification of the first key.

In one embodiment, the first device and the second device may directly use the first key as the shared key.

In one embodiment, the shared key may be calculated based on the first key. In the embodiment, the shared key may be calculated by the first device and the second device, respectively.

It should be noted that the timing for the first device and the second device to calculate the shared key shall fall within the scope of protection of the embodiments as long as the sequence generation parameter corresponding to the downlink sensing signal is acquired based on the shared key. In the following descriptions, no limitation is placed on the processing timing for calculating the shared key, and/or, the processing timing for the first device and the second device to acquire the related parameter(s) used to calculate the shared key.

In such embodiment, the manner of the first device and the second device calculating the shared key is calculating the shared key based on the first key. The first device and the second device calculate the shared key by using the same manner and the same parameter, and finally acquire the same shared key theoretically. Therefore, the related description of calculating the shared key based on the first key described below may be applied to the first device and the second device, and the processes performed by different devices will not be distinguished below.

The key algorithm used to calculate the shared key may be defaulted or specified in the protocol(s). For example, the key algorithm may include at least one of the following: a key derivation function (KDF); a first authentication function; a second authentication function; a third key generation function (e.g., may be denoted as f3); a fourth key generation function (e.g., may be denoted as f4); a fifth key generation function (e.g., may be denoted as f5); a hash algorithm; an Advanced Encryption Standard (AES); Snow Third Generation (SNOW 3G); ZUChongzhi (ZUC); an XOR calculation; or a direct connection calculation. Herein, the hash algorithm may include Hash based Message Authentication Code-Secure Hash Algorithm-256 (HMAC-SHA-256, which is a hash-based message authentication code using secure hash algorithm 256, denoted as SHA-256); or, other hash algorithms or hash functions may be used, which are not exhaustively listed in the embodiments.

Taking the first key to be KgNB as an example, the calculation of the shared key K may be represented by the following formula: K = KDF (KgNB). The shared key may also alternatively be represented as Ksf, which will not be repeated hereinafter.

Optionally, the shared key may be calculated based on the first key and at least one of the following parameters: the identification of the first device; the identification of the second device; a random number (nonce); or an identification of a sensing service.

The identification of the sensing service may be replaced with a sensing service type, and the identification of the sensing service may be represented as a sensing service ID. The identification of the sensing service may be configured to the first device and the second device by the SF. For example, when the SF sends the first information to the first device and/or the second device, respectively, the identification of the sensing service may be carried in the first information.

The random number may be generated by the first device, and the random number may be further sent from the first device to the second device. Alternatively, the random number may be generated by the second device, and the random number may be further sent from the second device to the first device. Alternatively, the random number may be carried in the first information, i.e., may be configured to the first device and the second device by the network side (such as the SF). It should be understood that the foregoing is the exemplary description; and in practical processing, as long as the first device and the second device can acquire the same random number, it shall fall within the scope of protection of the embodiments.

It should be understood that the foregoing is only the exemplary description of the parameter(s) used to calculate the shared key. In practical processing, other parameters may be added. For example, an indicator of the sensing service may also be included to indicate the execution of the sensing service, and all possible parameters that may be used to calculate the shared key are not be exhaustively listed herein.

Still taking the first key to be KgNB as an example, the calculation of the shared key may be represented by the following formula: K = KDF (KgNB, "Sensing", sensing service ID, UE ID, gNB ID, Nonce), and the meanings of the remaining parameters in the formula are the same as those defined in the foregoing embodiments. In the formula, except for the first key KgNB, all other parameters may be optional parameters, where K represents the shared key, "Sensing" represents the indicator of the sensing service, the sensing service ID is the ID of the sensing service, and the UE ID and the gNB ID are the identification of the first device and the identification of the second device, respectively. For example, if the first device is the terminal and the second device is the access network combined, the UE ID is the identification of the first device, and the gNB ID is the identification of the second device. Except for KgNB, all other parameters in the formula may be optional parameters.

In some possible implementations, the shared key may be calculated based on a second key shared by the first device and the core network device. The shared key may be calculated by the first device and the core network device respectively, and the shared key is configured on the second device side.

In the embodiment, the first device is the terminal, and the second device is the access network device. In the implementation, the terms of "first device" and "second device" may not be used for illustration; and the terminal and the access network device are described as examples for illustration. It should be noted that as long as the timing for the terminal and the access network device to acquire or calculate the shared key occurs before the sequence generation parameter corresponding to the downlink sensing signal is acquired based on the shared key, it shall fall within the scope of protection of the embodiments. In the following descriptions, no limitation is placed on the processing timing for calculating the shared key, and/or, the processing timing for acquiring the related parameter(s) used to calculate the shared key.

On the terminal side, the shared key may be calculated based on the second key. On the access network device side, the shared key may be configured, and the process of the access network device may further include receiving the shared key from the core network device.

On the core network device side, the shared key may be calculated based on the second key. The process of the core network device may include: calculating the shared key based on the second key; and sending the shared key to the access network device.

The specific trigger manner of the core network device to calculate the shared key is not limited in the embodiments. For one example, when the terminal sends the first request message to the SF through the core network device, the core network device may calculate the shared key and further configure the shared key to the access network device. For another example, when the access network device sends the second request message to the SF through the core network device, the core network device may calculate the shared key and further configure the shared key to the access network device. In such case, the shared key may be sent to the access network device at the same time as the first information, for example, the first information and the shared key may be carried by the same message, and the like, which is not limited or exhaustive listed herein.

The core network device may include at least one of the following: Access and Mobility Management Function (AMF), Authentication Server Function (AUSF), SEcurity Anchor Function (SEAF), AKMA Server (AAnF, AKMA Anchor Function), GBA Server Bootstrapping Server Function (BSF), Application Function (AF), SF, etc. The AMF and SEAF may also be co-formed. Accordingly, the second key shared by the terminal and the core network device may be one of the following: a K_{AMF} shared between the terminal and the AMF; a K_{SEAF} shared between the terminal and the AUSF (AMF); a K_{AKMA} shared between the terminal and the AKMA; a K_{AF} shared between the terminal and the AF; and a GBA key such as K_{sNAF} shared between the terminal and the GBA server. It should be understood that the foregoing is the exemplary description; and all possible types of keys that may be the second key are not limited or exhaustively listed herein.

The terminal may determine the type of the second key in the following several ways.

In one way, the type of the second key used by the terminal may be defaulted or specified by the protocol(s). In such manner, the type of the second key used by the terminal is independent of how the terminal receives the first information.

In one way, the type of the second key used by the terminal may be related to the first information received by the terminal.

In one case, the operation of the terminal receiving the first information may be: receiving the first information from the SF through the core network device. In such case, the terminal receiving the first information from which core network device may also be used to determine the type of the second key used by the terminal. For one example, when the terminal receives the first information from the AMF, it may be determined that the second key is K_{AMF}. For another example, when the terminal receives the first information from the AUSF, it may be determined that the second key is K_{SEAF}. For yet another example, when the terminal receives the first information from the AAnF, it may be determined that the second key is K_{AKMA} or K_{AF}. For yet another example, when the terminal receives the first information from the NAF, it may be determined that the second key is K_{sNAF}.

In one case, the operation of the terminal receiving the first information may be that: the terminal receives the first information from the SF through the access network device. In such case, the access network device may receive the first information from the SF through the core network device, and further send the first information to the terminal. Moreover, the access network device may send an identification of the core network device (such as at least one of an ID, a name, a number, etc.) to the terminal. Accordingly, the terminal may determine the type of the second key based on the identification of the core network device.

It should be understood that since both the terminal and the core network device substantially calculate the shared key based on the second key, and the terminal and the core network device shall use the same key algorithm and other same parameters to calculate the shared key, the shared keys acquired by the terminal and the core network device shall theoretically be the same. Different names of the shared keys calculated by different devices are not distinguished in the embodiments.

The description of the key algorithm used to calculate the shared key may be the same as that of the foregoing embodiments, which will not be repeated in detail herein.

Taking the second key to be K_{AMF} as an example, the shared key K calculated by the terminal and the core network device based on the second key may be represented by the following formula: K = KDF (K_{AMF}).

Optionally, on the terminal side and the core network device side, the shared key may be calculated based on the second key and at least one of the following parameters: the identification of the access network device; the random number (nonce); the identification of the terminal; or the identification of the sensing service.

Taking the second key to be K_{AMF} as an example, on the terminal side and the core network device (AMF) side, the shared key may be calculated by using the following formula: K = KDF (K_{AMF}, "Sensing", sensing service ID, UE ID, gNB ID, Nonce), where K represents the shared key; "Sensing" represents the indicator of the sensing service; the sensing service ID is the ID of the sensing service; the UE ID is the identification of the terminal; and the gNB ID is the identification of the access network device. Except for the second key K_{AMF}, all other parameters in the formula may be optional parameters.

Taking the second key to be K_{SEAF} as an example, on the terminal side and the core network device (AUSF) side, the shared key may be calculated by using the following formula: Ksf = KDF (K_{SEAF}, "Sensing", sensing service ID, UE ID, gNB ID, Nonce). The meaning of each parameter in the formula may be the same as that in the foregoing examples, which will not be repeated in detail herein. In the formula, except for the second key K_{SEAF}, the other parameters may be optional parameters.

It should be noted that the foregoing is merely the exemplary description; and in practical processing, the second key may be replaced with any one of K_{AKMA}, K_{AF}, K_{sNAF}, etc., which will not be repeated in detail herein.

Furthermore, the random number may be generated by the core network device. The identification of the sensing service and/or the second random number on the terminal side may be configured.

Specifically, on the terminal side, the method further includes receiving at least one of the following from the core network device: the identification of the sensing service; or the random number. As long as the timing for the terminal to receive the identification of the sensing service and/or the random number occurs before the sequence generation parameter corresponding to the downlink sensing signal is acquired based on the shared key, it shall fall within the scope of the protection of the embodiments. For example, the timing may occur before receiving the reflected signal of the downlink sensing signal. For one example, when the terminal sends the first request message to the SF through the core network device, the core network device may forward the first information sent by the SF to the terminal, and simultaneously send the first request message to the terminal. For another example, when the access network device sends the second request message to the SF through the core network device, the core network device may forward the first information sent from the SF to the access network device, and simultaneously send the random number to the terminal. The embodiments do not limit the timing for the terminal to receive the identification of the sensing service and/or the random number, or the related procedure of the terminal receiving the identification of the sensing service and/or the random number.

In some possible implementations, the first device may receive the shared key.

In one embodiment, when the first device is the access network device and the second device is the terminal, the access network device may receive the shared key from the core network device. In such case, the core network device and the terminal may calculate the shared key based on the second key shared by both parties. The specific processing manner may be similar to that of the aforementioned embodiments, which will not be repeated in detail hereinafter.

In one embodiment, the first device is the terminal, and the second device is the access network device; alternatively, the first device is the access network device, and the second device is the terminal, where the first device may receive the shared key.

In such embodiment, the shared key may be generated by the SF and further configured to the first device and the second device, respectively. In the embodiment, the shared key may be K_{sf}. The manner for the SF to calculate the shared key is not limited in the embodiments; and as long as the first device and the second device can finally acquire the same shared key, the manner shall fall within the scope of the protection of the embodiments. The embodiments do not limit the timing for the SF to configure the shared key for the first device and the second device; as long as the timing for the SF to configure the shared key for the first device and the second device occurs before the sequence generation parameter corresponding to the downlink sensing signal is acquired based on the shared key, it shall fall within the scope of the protection of the embodiments.

In some possible implementations, the first information may further include the identification of the shared key.

In the embodiment, by carrying the identification of the shared key in the first information, the SF may directly instruct the first device and the second device to use the same key as the shared key. The shared key may be any of multiple possible types of keys that have been previously generated and shared by the first device and the second device.

For example, the first device and the second device have acquired at least one of the following shared by both parties through other protocols or procedures in advance: an access stratum key; an access stratum security base key; a next hop key (NH); a physical layer key, etc. The descriptions of the various types of keys may be the same as that of the foregoing embodiments, which will not be repeated in detail herein. For one example, the SF may include or carry the ID of Kphy in the first information, so that both the first device and the second device can know that Kphy is used as the shared key to be used for the current time, and the shared key is used to acquire the sequence generation parameter corresponding to the downlink sensing signal. For another example, the SF may include or carry the ID of the K_{UPenc} in the first information, so that both the first device and the second device can know that the K_{UPenc} is used as the shared key to be used for the current time, and the shared key is used to acquire the sequence generation parameter corresponding to the downlink sensing signal.

In some possible implementations, the first information may be used for the first device to determine to generate the sequence generation parameter corresponding to the downlink sensing signal based on a plurality of bits truncated from the shared key.

Specifically, after the first device receives the first information, the method further includes: truncating the plurality of bits from the shared key based on the first information, and generating the sequence generation parameter corresponding to the downlink sensing signal based on the plurality of bits.

Herein, the operation of truncating the plurality of bits from the shared key based on the first information may refer to: determining a truncation position based on the first information, and truncating the plurality of bits from the shared key based on the truncation position.

The operation of generating the sequence generation parameter corresponding to the downlink sensing signal based on the plurality of bits may mean that the plurality of bits are used as the sequence generation parameter corresponding to the downlink sensing signal. That is, the sequential order of the plurality of bits may remain unchanged, the value of each bit in the plurality of bits may remain unchanged, and the plurality of bits may be directly used as the sequence generation parameter of the downlink sensing signal. The sequence of the plurality of bits remaining unchanged may mean that the sequential order of the plurality of bits is maintained in the same manner as the sequential order of the plurality of bits in the shared key.

In a preferred example, the number of the plurality of bits truncated from the shared key may be 32 or 32 bits.

During the process of generating the PRS signal, the main variable comes from cinit, and the main core variable in cinit is ${n}_{ID , seq}^{PRS}$. In the relevant protocols, the range of the parameter ${n}_{ID , seq}^{PRS}$ is: 0~4095 = 0~2¹² - 1. In the example, by increasing the value range of ${n}_{ID , seq}^{PRS}$, the range space of the parameter may be expanded from 2¹² to 0~2³¹ - 1. By increasing the value range of the parameter ${n}_{ID , seq}^{PRS}$, the possibility space of the parameter may be increased by 2¹⁹. The PRS possibility space guessed by the attacker may be increased from in the original protocol to 2¹¹², which is close to the possibility space size of 2¹²⁸.

It should be understood that the foregoing is merely the exemplary illustration; and in practical processing, the number of the plurality of bits truncated from the shared key may not be limited to be 32 or 32 bits. For instance, in some possible examples, the number of the plurality of bits truncated from the shared key may be more than 32 bits, such as 47 bits, etc.

Alternatively, in some other examples, the number of the plurality of bits truncated from the shared key may be less than 32 bits and greater than or equal to 12 bits, etc., which are not exhaustively listed herein.

Exemplarily, taking the sequence generation parameter corresponding to the downlink sensing signal to be ${n}_{ID , seq}^{PRS}$ as an example, the process of the first device truncating the plurality of bits from the shared key based on the first information and generating the sequence generation parameter corresponding to the downlink sensing signal based on the plurality of bits may be represented as: = Truncate ₃₂ [K], where K is the shared key, Truncate[] represents a truncating calculation or a truncation calculation or a truncation function, and "32" represents the number of the plurality of bits that are truncated. The shared key may be any shared key described in the foregoing embodiments, which will not be repeated herein.

The first information may be used to indicate at least one of the following: a truncation starting bit in the shared key; a truncation ending bit in the shared key; the number of truncated bits from the shared key; or, the truncation rule of the shared key.

In one embodiment, the first information may be used to indicate the truncation starting bit in the shared key and the truncation ending bit in the shared key.

The truncation starting bit in the shared key may be indicated by position information of the truncation starting bit in the shared key. The truncation ending bit in the shared key may be indicated by position information of the truncation ending bit in the shared key. In other words, the first information may include the position information of the truncation starting bit in the shared key and the position information of the truncation ending bit in the shared key.

Herein, the position information may be indicated in a manner of numbering or ordering. It should be noted that the numbering is merely the exemplary description. In some other examples, the numbering may also be alternatively represented as an index (index number), or a sequence number, etc., and all possible names of the numbering are not limited or exhaustively listed herein. In addition, the ordering is merely the exemplary description. In some other examples, the ordering may also be alternatively represented as any one of the ordering order, or the ordering position, or the ranking, etc., and all possible names of the ordering are not limited or exhaustively listed herein.

In terms of the composition of the shared key, different bits among all bits included in the shared key may correspond to different numbers. That is, each bit in the shared key may correspond to a number, the numbers corresponding to two adjacent bits may be consecutive, and the number corresponding to the subsequent bit of the two adjacent bits may be greater than the number corresponding to the previous bit. For example, the number may be incremented from the lowest bit in the shared key, the number corresponding to the lowest bit may be 0, and so on. The number corresponding to the highest bit in the shared key may be N, and N is equal to the length of the shared key minus one. Alternatively, different bits among all the bits included in the shared key may be distinguished by different orders. For example, the order of the lowest bit in the shared key is 1, and the order of the highest bit in the shared key is M, where M is equal to the length of the shared key. Therefore, in the first information, the number or the order of the truncation starting bit in the shared key may be used to indicate the truncation starting bit in the shared key; and the number or the order of the truncation ending bit in the shared key may be used to indicate the truncation ending bit in the shared key.

Optionally, whether the specific type of the position information is the numbering or the ordering may be defaulted or specified in the protocol(s). For example, if the numbering is used as the position information by default, the first information may include at least one of the following: the number of the truncation starting bit in the shared key; or, the number of the truncation ending bit in the shared key.

Optionally, whether the specific type of the position information is the numbering or the ordering may be indicated in the first information. For example, the first information may include a type indication of the position information, in addition to at least one of the position information of the truncation starting bit in the shared key and the position information of the truncation ending bit in the shared key. The type indication of the position information may be used to indicate whether the numbering or the ordering is used as the position information. For example, if the type indication of the position information includes the index, it may be indicated that the numbering is used as the position information. For another example, if the type indication of the position information includes the order, it may be indicated that the ordering is used as the position information.

The operation of truncating the plurality of bits from the shared key based on the first information may include: determining a starting bit in the shared key based on the position information of the truncation starting bit in the shared key included in the first information; determining an ending bit in the shared key based on the position information of the truncation ending bit in the shared key included in the first information; and extracting the starting bit, the ending bit, and all bits between the starting bit and the ending bit in the shared key as the plurality of bits that are truncated.

For example, the first information may be represented as {i-start, i-stop}, where i-start represents the position information of the truncation starting bit corresponding to the shared key, and i-stop represents the position information of the truncation ending bit corresponding to the shared key.

Exemplarily, the first information may include: a sequence number of the truncation starting bit corresponding to the shared key and a sequence number of the truncation ending bit corresponding to the shared key. For example, the first information may include {0, 31}, that is, i-start is equal to 0 (indicating that the sequence number of the truncation starting bit is 0), and i-stop is 31 (indicating that the sequence number of the truncation ending bit is 31). Then, the first device may determine, based on the first information, that the sequence number of the starting bit in the shared key is 0 and the sequence number of the ending bit in the shared key is 31; and all 32 bits with the sequence numbers from 0 to 31 in the shared key may be truncated as the truncated 32 bits.

For instance, the first information may include the order of the truncation starting bit corresponding to the shared key and the order of the truncation ending bit corresponding to the shared key. For example, the first information may include {97, 128}, that is, i-start equal to 97 indicates that the order of the truncation starting bit is 97, and i-stop equal to 128 indicates that the order of the truncation ending bit is 128. Then, the first device may determine, based on the first information, that the order of the starting bit in the shared key is 97 and the order of the ending bit in the shared key is 128; and all 32 bits with the orders from 97 to 128 in the shared key may be truncated as the truncated 32 bits.

In one embodiment, the first information may be used to indicate the truncation starting bit in the shared key and the number of truncated bits from the shared key. Alternatively, the first information may be used to indicate the truncation ending bit in the shared key and the number of truncated bits from the shared key.

The number of truncated bits from the shared key may refer to the total number of the plurality of bits truncated from the shared key. The number of truncated bits from the shared key may also be replaced with the truncated length of the shared key, which also refers to the total number of the truncated bits.

Optionally, the number of truncated bits from the shared key may be represented by a value that directly indicates the number of truncated bits from the shared key or a numerical value that directly indicates the number of truncated bits from the shared key. For example, by indicating that the value of the number of truncated bits from the shared key is 32, it may be indicated that the number of truncated bits from the shared key is 32 or 32 bits.

Exemplarily, the first information may include the order of the truncation starting bit corresponding to the shared key and the value of the number of truncated bits from the shared key.

The operation of the first device truncating the plurality of bits from the shared key based on the first information may include: determining the starting bit in the shared key based on the position information of the truncation starting bit in the shared key included in the first information, and using the starting bit in the shared key as a current bit; determining whether the number of extracted bits reaches the value of the number of the truncated bits from the shared key included in the first information; if the number of extracted bits does not reach the value of the number of the truncated bits from the shared key included in the first information, continuing to extract a bit following the current bit, and returning to execute the process of determining whether the number of extracted bits reaches the value of the number of the truncated bits from the shared key included in the first information. When the number of extracted bits reaches the value of the number of the truncated bits from the shared key included in the first information, the extraction process may be terminated, and all the currently extracted bits may be taken as the plurality of bits truncated from the shared key.

Alternatively, the operation of the first device truncating the plurality of bits from the shared key based on the first information may include: calculating the position information of the truncation ending bit in the shared key based on the position information of the truncation starting bit in the shared key included in the first information and the number of truncated bits from the shared key included in the first information; determining the starting bit in the shared key based on the position information of the truncation starting bit, and determining the ending bit in the shared key based on the position information of the truncation ending bit; and truncating the starting bit, the ending bit, and all bits between the starting bit and the ending bit in the shared key as the plurality of bits that are truncated.

Herein, the operation of calculating the position information of the truncation ending bit in the shared key based on the position information of the truncation starting bit in the shared key included in the first information and the value of the number of the truncated bits from the shared key included in the first information may refer to: adding the position information of the truncation starting bit in the shared key included in the first information and the value of the number of the truncated bits from the shared key included in the first information to acquire the position information of the truncation ending bit in the shared key.

Exemplarily, the first information may include the order of the truncation ending bit corresponding to the shared key and the value of the number of the truncated bits from the shared key.

The operation of the first device truncating the plurality of bits from the shared key based on the first information may include: determining the ending bit in the shared key based on the position information of the truncation ending bit in the shared key included in the first information, and using the ending bit in the shared key as a current bit; determining whether the number of extracted bits reaches the value of the number of the truncated bits from the shared key included in the first information; if the number of extracted bits does not reach the value of the number of the truncated bits from the shared key included in the first information, continuing to extract a bit preceding the current bit, and returning to execute the process of determining whether the number of extracted bits reaches the value of the number of the truncated bits from the shared key included in the first information. When the number of extracted bits reaches the value of the number of the truncated bits from the shared key included in the first information, the extraction process may be terminated, and all the currently extracted bits may be taken as the plurality of bits truncated from the shared key.

Alternatively, the operation of the first device truncating the plurality of bits from the shared key based on the first information may include: calculating the position information of the truncation starting bit in the shared key based on the position information of the truncation ending bit in the shared key included in the first information and the value of the number of truncated bits from the shared key included in the first information; determining the starting bit in the shared key based on the position information of the truncation starting bit, and determining the ending bit in the shared key based on the position information of the truncation ending bit; and truncating the starting bit, the ending bit, and all bits between the starting bit and the ending bit in the shared key as the plurality of bits that are truncated.

Herein, the operation of calculating and acquiring the position information of the truncation ending bit in the shared key based on the position information of the truncation ending bit in the shared key included in the first information and the value of the number of the truncated bits from the shared key included in the first information may refer to: subtracting the value of the number of the truncated bits from the shared key included in the first information from the position information of the truncation ending bit in the shared key included in the first information, to acquire the position information of the truncation ending bit in the shared key.

Optionally, the number of the truncated bits from the shared key may be represented by a number indicator.

Exemplarily, on the first device side, at least one of the following may be pre-configured or pre-stored: a plurality of selectable number indicators; a plurality of selectable numbers of truncated bits; or, a correspondence relationship between each selectable number indicator and each selectable number of truncated bits. Here, different selectable number indicator may correspond to different selectable number of truncated bits.

For example, two selectable number indicators may be pre-configured or pre-stored by the first device, namely, a first selectable number indicator and a second selectable number indicator. Herein, the first selectable number indicator may be used to indicate that the number of truncated bits is 12, and the second selectable number indicator may be used to indicate that the number of truncated bits is 32. The first selectable number indicator and the second selectable number indicator shall fall within the scope of protection of the embodiments as long as the first selectable number indicator and the second selectable number indicator are different. For example, the first selectable number indicator is "00" and the second selectable number indicator is "01"; alternatively, the first selectable number indicator is "10" and the second selectable number indicator is "01", which will not be limited or exhaustively listed.

Exemplarily, the first information may include the order of the truncation starting bit corresponding to the shared key and the number indicator of the number of truncated bits from the shared key. Alternatively, the first information may include a sequence number of the truncation ending bit corresponding to the shared key and the number indicator of the number of bits truncated from the shared key. In such example, the process of the first device truncating the plurality of bits from the shared key based on the first information may be similar to that of the foregoing embodiments, except that it is necessary to determine the corresponding number of truncated bits based on the number indicator of the number of truncated bits from the shared key included in the first information, and thus the descriptions will not be repeated herein.

In some possible examples, the number of truncated bits from the shared key may also be defaulted to the first device or specified by the protocol(s). In such example, the first information may only be used to indicate the truncation starting bit in the shared key; alternatively, the first information may only be used to indicate the truncation ending bit in the shared key.

Since the number of truncated bits from the shared key is defaulted or specified in the protocol(s), after receiving any of the aforementioned first information, the first device may determine the plurality of truncated bits in combination with the number of the its existing truncated bits from the shared key and the truncation starting bit in the shared key; alternatively, the first device may determine the plurality of truncated bits in combination with the number of the its existing truncated bits from the shared key and the truncation ending bit in the shared key. The specific manner of determining the plurality of truncated bits may be similar to that of the foregoing embodiments, and thus the descriptions will not be repeated herein.

In one embodiment, the first information may be used to indicate the truncation rule of the shared key.

Optionally, the truncation rule of the shared key may be indicated by specific rule description information. For example, the rule description information may include at least one of the following: truncation for odd bits; truncation for even bits; truncation for a plurality of bits that are specified; the number of truncated bits, etc. Herein, the truncation for the plurality of bits that are specified may include truncating the bits at the plurality of positions that are specified.

For example, the first information may include the truncation rule of the shared key, and the truncation rule may include the truncation for odd bits and the number of truncated bits. In such case, the first device may start the extraction from the lowest odd bit based on the truncation for odd bits indicated by the truncation rule in the first information until the number of all currently extracted bits reaches the value of the number of truncation bits indicated by the truncation rule in the first information. Specifically, the first device may extract the lowest odd bit as the current bit based on the truncation for odd bits indicated by the truncation rule in the first information. The first device may determine whether the number of extracted bits reaches the value of the number of truncated bits indicated by the truncation rule in the first information. If the number of extracted bits does not reach the value of the number of truncated bits indicated by the truncation rule in the first information, the first device may continue to extract an odd bit following the current bit, and return to execute the process of determining whether the number of extracted bits reaches the value of the number of truncated bits indicated by the truncation rule in the first information; and if the number of extracted bits reaches the value of the number of truncated bits indicated by the truncation rule in the first information, the extraction process may be terminated, and all the currently extracted bits may be taken as the plurality of truncated bits from the shared key.

For example, the first information may include the truncation rule of the shared key, and the truncation rule may include truncation for the plurality of bits that are specified. In such case, based on the plurality of specified bits to be truncated indicated by the truncation rule in the first information, the first device may extract the plurality of bits from the corresponding positions of the shared key. It should be understood that the indicated positions of the plurality of bits may be the numbering or sequence numbers, and the related description may be the same as that of the foregoing embodiments, which will not be repeated herein.

Optionally, the truncation rule of the shared key may be indicated by using a rule indicator.

Exemplarily, the first device may pre-store or pre-configure at least one of the following: a plurality of selectable rule indicators; a plurality of selectable rules; or, a correspondence between each selectable rule indicator and each selectable rule. Here, different selectable rule indicator may correspond to different rule. For example, at least one of following may be applied: a first selectable rule indicator of the plurality of selectable rule indicators corresponding to the truncation for odd bits; a second selectable rule indicator corresponding to the truncation for even bits; or, a third selectable rule indicator corresponding to the number of truncated bits, etc. Here, the three selectable rule indicators shall fall within the scope of protection of the embodiments as long as they are different from each other. For example, the first selectable rule indicator is "001", the second selectable rule indicator is "010", the third selectable rule indicator is "011"; alternatively, the first selectable rule indicator is "100", the second selectable rule indicator is "200", the third selectable rule indicator is "300", etc., which will not be limited or exhaustively listed herein.

Exemplarily, the first information may include one or more rule indicators. The process of determining the plurality of bits by the first device may be similar to that of the foregoing examples, except that the first device may firstly determine the corresponding specific rule(s) based on one or more rule indicators, and then perform the process of truncating the plurality of bits; thus, the description will not be repeated herein.

In some possible implementations, the first information may be used by the first device to determine to calculate the sequence generation parameter corresponding to the downlink sensing signal based on the shared key and the calculation parameter. Specifically, after the first device receives the first information, the method further includes: determining the calculation parameter based on the first information, and calculating the sequence generation parameter corresponding to the downlink sensing signal based on the shared key and the calculation parameter.

The calculation parameter may be a specific numerical value, and the calculation parameter may be a positive integer.

The operation of calculating the sequence generation parameter corresponding to the downlink sensing signal based on the shared key and the calculation parameter may refer to: calculating and acquiring a first value from the calculation parameter based on a first calculation manner; and calculating and acquiring the sequence generation parameter corresponding to the downlink sensing signal from the shared key and the first value based on a second calculation manner.

Both of the first calculation manner and the second calculation manner may be pre-configured, by default, or specified in the protocol(s).

Exemplarily, the first calculation manner may be a calculation by raising 2 to a power; the second calculation manner may be a modulus calculation (mod) or a remainder calculation, i.e., calculating the remainder of division. Specifically, the sequence generation parameter corresponding to the downlink sensing signal may be calculated based on the shared key and the calculation parameter, and the sequence generation parameter corresponding to the downlink sensing signal may be calculated as follows: calculating and acquiring the first value by raising 2 to the power L, where the value of L is equal to the calculation parameter; calculating a remainder after dividing the shared key by the first value, and taking the remainder as the sequence generation parameter corresponding to the downlink sensing signal. Herein, the calculation for the remainder after dividing the shared key by the first value may be the modulus calculation or remainder calculation.

For example, taking the sequence generation parameter corresponding to the downlink sensing signal to be ${n}_{ID , seq}^{PRS}$ as an example, the calculated and acquired sequence generation parameter corresponding to the downlink sensing signal may be represented as: ${n}_{ID , seq}^{PRS} = K mod {2}^{L}$, where K is the shared key, mod represents the modulo calculation or modulo function, and "L" represents the calculation parameter.

During the process of generating the PRS signal (i.e., the downlink sensing signal), the main variable comes from cinit. In the technical solutions provided by the embodiment, the principle of selecting the calculation parameter (i.e., L) may be that: it is necessary to ensure that the sequence generated by cinit is an m-sequence, so that the sensing sequence is generated by two m-sequences.

In a preferred example, the calculation parameter may be 31. The sequence generation parameter corresponding to the downlink sensing signal acquired by the aforementioned calculation can be represented as : ${n}_{ID , seq}^{PRS} = K mod {2}^{31}$.

In the foregoing embodiments, during the process of generating the PRS signal (i.e., the downlink sensing signal), the main variable comes from cinit, and the main core variable in cinit is ${n}_{ID , seq}^{PRS}$. In the relevant protocols, the range of the parameter ${n}_{ID , seq}^{PRS}$ is: 0~4095 = 0~2¹² - 1. In the example, by the calculation manner of ${n}_{ID , seq}^{PRS} = K mod {2}^{31}$, the value range of ${n}_{ID , seq}^{PRS}$ may be {0, 1,..., 2³¹-1}; as such, the range space of the parameter ${n}_{ID , seq}^{PRS}$ may expand from {0, 1,..., 2¹²-1} to {0, 1,..., 2³¹-1}. By increasing the value range of the parameter ${n}_{ID , seq}^{PRS}$, the possibility space of the parameter may be increased by 2¹⁹. The PRS possibility space guessed by the attacker may be increased from 2⁹³ in the original protocol to 2¹¹², which is close to the possibility space size of 2¹²⁸.

In some possible examples, the calculation parameter may also be 47. For example, the calculated and acquired sequence generation parameter corresponding to the downlink sensing signal may be represented as : ${n}_{ID , seq}^{PRS} = K mod {2}^{47}$ .

In the example, by the calculation manner of ${n}_{ID , seq}^{PRS} = K mod {2}^{47}$, the value range of ${n}_{ID , seq}^{PRS}$ may be increased as: {0, 1,..., 2⁴⁷-1}; as such, the range space of the parameter ${n}_{ID , seq}^{PRS}$ may be expanded from {0, 1,..., 2¹²-1} to {0, 1,..., 2⁴⁷-1}. By increasing the value range of the parameter ${n}_{ID , seq}^{PRS}$, the possibility space of the parameter may be increased by 2³⁵. The PRS possibility space guessed by the attacker may be increased from the 2⁹³ in the original protocol to the possibility space size of 2¹²⁸.

The foregoing are only some exemplary descriptions of possible values of the calculation parameter. In practice, the calculation parameter may be greater or smaller, and all possible values of the calculation parameter are not exhaustively listed herein.

The manner of determining the calculation parameter may vary depending on the content of the first information. The manner of determining the calculation parameter will be described in an exemplary manner below in conjunction with multiple possible embodiments.

The first information may include one of the following: the calculation parameter; and range-related information corresponding to the sequence generation parameter. The range-related information corresponding to the sequence generation parameter may be used to determine the calculation parameter.

In one embodiment, the first information may include the calculation parameter. That is, the first information may directly include a specific value of the calculation parameter, and the operation of the first device determining the calculation parameter based on the first information may be: extracting the calculation parameter from the first information.

In one embodiment, the first information may include the range-related information corresponding to the sequence generation parameter.

Herein, the range-related information corresponding to the sequence generation parameter may include one of the following: a value range corresponding to the sequence generation parameter; and a value range indicator corresponding to the sequence generation parameter.

Optionally, the range-related information corresponding to the sequence generation parameter may include a value range corresponding to the sequence generation parameter.

In one example, the value range corresponding to the sequence generation parameter may refer to a range of identification of the sequence generation parameter (abbreviated as Sequence ID). For example, the value range corresponding to the sequence generation parameter may be {0... A} or {0... 2^{A-1}}, where A is a positive integer.

In such case, the operation of determining the calculation parameter by the first device based on the first information may be: determining the calculation parameter based on the value range corresponding to the sequence generation parameter.

Exemplarily, the manner of determining the calculation parameter may be that: by using a logarithmic function with a base of 2, calculating and acquiring the calculation parameter from the maximum value in the value range corresponding to the sequence generation parameter. For example, the value range corresponding to the sequence generation parameter is {0... 2³²-1}; accordingly, based on the maximum value 2³²-1 in the value range corresponding to the sequence generation parameter, the calculation may be performed on the maximum value in the value range corresponding to the sequence generation parameter by using the logarithmic function with a base of 2, to acquire 31.

In one example, the value range corresponding to the sequence generation parameter may also indicate the maximum value corresponding to the sequence generation parameter, such as 2³²⁻¹. Accordingly, the manner of the first device determining the calculation parameter based on the first information may be that: by using the logarithmic function with the base of 2, calculating and acquiring a second value from the maximum value corresponding to the sequence generation parameter included in the first information; and acquiring the calculation parameter by adding 1 to the second value.

Optionally, the range-related information corresponding to the sequence generation parameter may include a value range indicator corresponding to the sequence generation parameter.

Exemplarily, the first device may pre-store or pre-configure at least one of the following: a plurality of selectable value range indicators; a plurality of selectable calculation parameters; a correspondence relationship between each selectable value range indicator and each selectable calculation parameter; or, a correspondence relationship between each selectable value range indicator and a selectable value range corresponding to the sequence generation parameter. Herein, different selectable value range indicator may correspond to different selectable calculation parameter and/or different selectable value range.

For example, the first device may pre-store two selectable value range indicators, as well as the corresponding selectable calculation parameters and/or selectable value ranges thereof. The first selectable value range indicator may correspond to the first selectable calculation parameter and/or the first selectable value range, the second selectable value range indicator may correspond to the second selectable calculation parameter and/or the second selectable value range, and the like. Herein, the first selectable value range indicator and the second selectable value range indicator shall fall within the scope of the protection of the embodiments as long as they are different. For example, the first selectable value range indicator is "0" and the second selectable value range indicator is "1"; alternatively, the first selectable value range indicator is "1", and the second selectable value range indicator is "2", and the like, which will not be limited or exhaustively listed herein.

For example, the first selectable value range indicator "0" may correspond to the first selectable calculation parameter (i.e., 32), and the second selectable value range indicator "1" may correspond to the second selectable calculation parameter (i.e., 12). It should be understood that the foregoing is merely the exemplary description; and in practical processing, the selectable range of the calculation parameter may include, but is not limited to, several possibilities of the above examples, and the selectable value range indicator is also not limited to several possibilities of the above examples, which are not exhaustively listed herein.

Exemplarily, the first information may include a value range indicator corresponding to the sequence generation parameter. The operation of determining the calculation parameter by the first device based on the first information may be: determining, based on a value range indicator corresponding to the sequence generation parameter, the calculation parameter corresponding to the value range indicator.

In some possible implementation, the first device is the access network device. After the access network device acquires the sequence generation parameter corresponding to the downlink sensing signal, the process of generating and sending the downlink sensing signal may include: calculating a sensing sequence based on the sequence generation parameter corresponding to the downlink sensing signal; sequentially extracting a plurality of bits from the sensing sequence, calculating and acquiring the modulation symbols from the plurality of bits based on the first modulation manner, mapping the modulation symbols to the corresponding sensing signal time-frequency resources; and then, acquiring and sending the downlink sensing signal. Herein, the number of modulation symbols may be plural, which is not limited herein.

Herein, the sensing sequence may also be referred to as any one of the following: a gold sequence, a bit stream, a sensing bit stream, etc.; and all possible names thereof are not limited or exhaustively listed herein. The sensing sequence may be the gold sequence, and the operation of calculating the sensing sequence based on the sequence generation parameter corresponding to the downlink sensing signal may refer to: calculating and acquiring the sensing sequence from the sequence generation parameter corresponding to the downlink sensing signal by using the gold sequence calculation manner.

For example, assuming that the sensing sequence is represented as c(n), where n = 0, 1, ... , MPN-1, and c(n) is calculated as follows: $c \left(n\right) = \left({x}_{1}\left(n+{N}_{c}\right)+{x}_{2}\left(n+{N}_{c}\right)\right) mod 2$ ${x}_{1} \left(n+31\right) = \left({x}_{1}\left(n+3\right)+{x}_{1}\left(n\right)\right) mod 2$ ${x}_{2} \left(n+31\right) = \left({x}_{2}\left(n+3\right)+{x}_{2}\left(n+2\right)+{x}_{2}\left(n+1\right)+{x}_{2}\left(n\right)\right) mod 2$ where NC=1600.

The first m sequence is initialized to x1(0)=1, ... ,x1(n)=0, n=1, ... ,30.

Initialization of the second m-sequence is as follows: ${c}_{init} = {\sum }_{i = 0}^{30} {x}_{2} \left(i\right) ⋅ {2}^{i}$ ${c}_{init} = \left(\begin{matrix}{2}^{22} \left|\frac{{n}_{ID , seq}^{PRS}}{1024}\right| + {2}^{10} \left({N}_{symb}^{slot}{n}_{s , f}^{μ}+l+1\right) \left(2\left({n}_{ID , seq}^{PRS}mod 1024\right)+1\right) \\ + \left({n}_{ID , seq}^{PRS}mod 1024\right)\end{matrix}\right) mod {2}^{31}$

The length of the Gold sequence c(n) is: 2³¹-1; ${n}_{ID , seq}^{PRS}$ is the sequence generation parameter corresponding to the downlink sensing signal calculated based on the technical solutions provided by the embodiments of the present disclosure. The specific generation manner thereof has been described in detail in the aforementioned embodiments, and will not be repeated herein. ${N}_{symb}^{slot}$ is the number of symbols in a slot; ${n}_{s , f}^{μ}$ is the time slot number; and *l* is the OFDM symbols within the time slot mapped by the sequence.

The process of extracting the plurality of bits and the process of calculating the modulation symbols may be executed alternately. For example, after extracting the plurality of bits for the first time, the extracted plurality of bits may be started to be processed and mapped to the corresponding time-frequency resources based on the first modulation manner; then continuing to extract the plurality of bits for the second time, the extracted plurality of bits may be processed and mapped to the corresponding time-frequency resources based on the first modulation manner, and so on until the sensing signal time-frequency resources are fully mapped.

The first modulation manner may be Quadrature Phase Shift Keying (QPSK). In such case, the number of the plurality of bits extracted each time may be 2 bits, and the processing related to the QPSK modulation and mapping of the PRS resources may be the same as the description of the aforementioned embodiments, and thus, the descriptions thereof will not be repeated in detail herein. The modulation symbol that is calculated acquired from the plurality of bits based on QPSK may be represented as: $r \left(m\right) = \frac{1}{\sqrt{2}} \left(1-2c\left(2m\right)\right) + j \frac{1}{\sqrt{2}} \left(1-2c\left(2m+1\right)\right)$ , where c(2m) and c(2m+1) are specific values of two bits respectively, and r(m) represents the m-th modulation symbol.

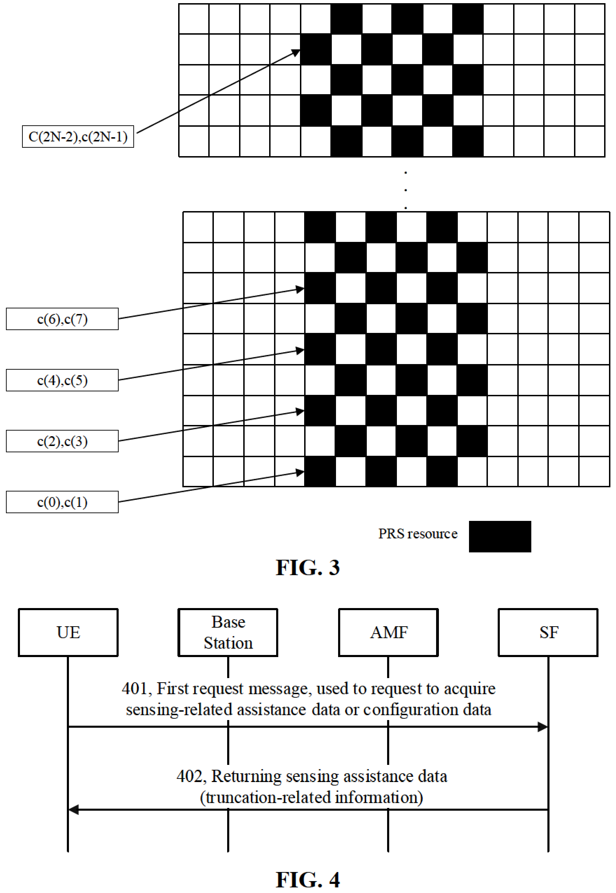

As illustrated in conjunction with FIG. 3, after generating the c(n) bit stream (sensing sequence, simply schematically represented as c(n)), the c(n) is sequentially modulated into symbols by QPSK starting from c(0) and further mapped to the subcarriers of corresponding to the symbols. Assuming that the number of PRS subcarriers corresponding to the symbols in the corresponding time slot is n, in the original protocol(s), it is necessary to take c(0), c(1),..., c(2N-1) bits from c(n), and then sequentially take 2 bits to be mapped to the corresponding subcarriers to generate the QPSK symbols. As shown in FIG. 3, taking the first symbol of the first resource as an example, each of {c(0), c(1)}, {c(2), c(3)}, {c(4), c(5)}, {c(6), c(7)}, {c(2N-2), c(2N-1)} is sequentially modulated into a symbol by QPSK and mapped to each subcarrier of the first symbol of the first resource (PRS resource).

In some possible implementations, the first device is the terminal. After the terminal acquires the sequence generation parameter corresponding to the downlink sensing signal and receives the echo signal of the downlink sensing signal, the process may include: calculating the sensing sequence based on the sequence generation parameter corresponding to the downlink sensing signal; sequentially extracting the plurality of bits from the sensing sequence; calculating and acquiring the modulation symbols from the plurality of bits by using the first modulation manner; and demodulating the echo signal of the downlink sensing signal based on the modulation symbols to acquire the sensing result.

Herein, the manner of calculating the sensing sequence based on the sequence generation parameter corresponding to the downlink sensing signal may be the same as that of the aforementioned embodiments, which will not be repeated in detail herein. The related descriptions of the first modulation manner may be the same as that of the aforementioned embodiments, which will not be repeated in detail herein. The specific process in which the terminal calculates and acquires the modulation symbols from the plurality of bits by using the first modulation manner may also be the same as the specific process in which the access network device side calculates and acquires the modulation symbols from the plurality of bits based on the first modulation manner, and thus will not be repeated in detail herein.

The operation of demodulating the echo signal of the downlink sensing signal based on the modulation symbol to acquire the sensing result may include: calculating a channel estimation value based on the modulation symbols corresponding to the first resource and the echo signal of the downlink sensing signal received on the first resource; and calculating and acquiring the sensing result based on the channel estimation value. The related parameter in the channel estimation value may include at least one of the following: an amplitude, a frequency, or a phase.

Herein, the operation of calculating and acquiring the sensing result based on the channel estimation value may refer to: calculating and acquiring the sensing result by using one or more algorithms according to different sensing requirements (such as different sensing types and/or different sensing services, etc.) and/or a default mode. The various possible algorithms may not be limited in the embodiments.

The first resource may include a first time domain resource and a first frequency domain resource. The first time domain resource may be any one of the following: a specified time moment; a period of time; or a time domain range in which a specified time t is located, etc. The first frequency domain resource may be any one of the following: a specified subcarrier; a subcarrier at a specified frequency f, etc. For example, assuming that the first resource is the resource with the time moment t and the subcarrier at the frequency of f, the downlink sensing signal sent by the access network device on the first resource may be represented as: x(t, f); and the reflected signal acquired after the downlink sensing signal passes through the sensing target may be represented as: y(t, f). Since the terminal side calculates the parameter modulation symbol(s) based on the same sensing sequence and the same calculation manner as the access network device, the modulation symbol(s) on the first resource shall be theoretically the same as the downlink sensing signal sent by the access network device on the first resource. As such, the modulation symbol(s) on the first resource may also be represented as: x(t, f). On the first resource (i.e., with the time moment t and the subcarrier at the frequency of f), the terminal may calculate a CSI of $H \left(t, f\right) = \frac{y \left(t, f\right)}{x \left(t, f\right)}$, where H() represents a channel estimation value, and the CSI may include the channel estimation value. For example, the respiratory rate may be estimated by using the CSI amplitude; the respiratory rate may be estimated by using the CSI phase transformation; the indoor human motion trajectory may be estimated by using the CSI Doppler information; gesture recognition may be implemented by using the CSI dynamic phase change; and human behavior detection may be implemented by the combination of the CSI amplitude and the phase, etc.

After completing the aforementioned processes, the terminal may further perform the following operations: reporting the sensing result. The operation of the terminal reporting the sensing result may include one of the following: the terminal reporting the sensing result to the core network device; the terminal reporting the sensing result to the access network device; the terminal reporting the sensing result to the SF. Here, the process related to the terminal will not be limited herein.

The technical solutions provided by the embodiments of the present disclosure will be described in combination with the related technologies.

The related technologies have not studied the security of transmission of the PRS signal from the perspective of its own security. When the PRS signal is used for performing the operations such as sensing services, the security of the PRS signal itself is crucial. Improving the security of the PRS signal itself is an important aspect to be considered to protect the sensing result from the PRS signal. After the PRS sequence is generated, it is mapped to the time-frequency grid points to generate the PRS resources, and the resources are repeated according to certain rules, to generate the PRS resource set for distribution. The attacker may perform blind detection on the PRS signal, and the following provides the analysis on the possibility space size of the PRS signal that is guessed by the attacker.

The related parameters for configuring the PRS sequence and resources, as well as the corresponding specific configurations are described below.

PRS Point A: this field specifies the absolute frequency of the reference resource block of the DL-PRS, its lowest subcarrier is also referred to as the DL-PRS Point A, with the value range of: 0 ~ 3278165.

startPRB: this field specifies the starting PRB index, which is defined as the reference DL-PRS Point A relative to the location frequency layer, with the value range of: 0 ~ 2176.

Bandwidth: this field specifies the number of PRBs allocated for a DL-PRS resource (allocated DL-PRS bandwidth), which is a multiple of 4 PRBs, with the value range of: 1 ~ 63.

PRS sequence: the PRS sequence, the value range of sequence ID: 0 ~ 4095 = 0 ~ 2¹²-1.

symbol offset: the starting symbol of the DL-PRS resource in a time slot, with the value range of: 0 ~ 12.

NumSymbol: the number of symbols 2, 4, 6, 12 per DL-PRS resource in a time slot.

comb size: this field specifies the resource element spacing in each symbol of the DL-PRS resource, with the value range of: 2, 4, 6, 12.

starting offset: the resource element (RE) offset in the frequency domain of the first symbol in the DL-PRS resource, with the value range of: 0 ~ CombSize-1.

The above parameters of the symbol offset, NumSymbol, comb size, and starting offset mutually restrict each other. These parameters may adopt different configuration modes according to different usage scenarios. Under different configuration modes, the possibility of the PRS resource space may be different. In the existing protocol(s), the size of the PRS resource possibility space is 2.653E+17. Furthermore, the PRS resource set may include multiple repeated instances, so that the possibility space size of the PRS for calculation can be increased to 9.537E + 27 ≈ 2⁹³.

However, in the technical solutions provided by the embodiments, the parameter range of generating the PRS sequence and the manner of generating the PRS sequence are changed, thereby achieving the purpose of improving the security of the PRS signal, and also providing higher security of the sensing service involving the privacy of the user relative to the positioning service. During the process of generating the PRS signal, the main variable comes from cinit, and the main core variable in cinit is ${n}_{ID , seq}^{PRS}$. The parameter selected in the example is the ${n}_{ID , seq}^{PRS}$ parameter in cᵢₙᵢₜ used to calculate the PRS sequence. In the relevant protocols, the range of the parameter ${n}_{ID , seq}^{PRS}$ is: 0~4095 = 0 ~2¹² -1. In the example, by increasing the value range of ${n}_{ID , seq}^{PRS}$, the range space of the parameter may be expanded from 2¹² to 0~2³¹ - 1. By increasing the value range of the parameter ${n}_{ID , seq}^{PRS}$, the possibility space of the parameter may be increased by 2¹⁹. The PRS possibility space guessed by the attacker may be increased from 2⁹³ in the original protocol to 2¹¹², which is close to the possibility space size of 2¹²⁸.

The technical solutions provided by the present disclosure are further illustrated in conjunction with the following examples.

In a first embodiment, the first device is a UE, and referring to FIG. 4:

At block 401, the UE sends a first request message to a sensing server (SF). The first request message is used to request to acquire first information, that is, the sensing-related assistance data or configuration data, which is primarily the assistance data (NR-DL-PRS-AssistanceData) required for the subsequent reception of the downlink PRS signaling by the UE.

It should be noted that such operation may be optional. Therefore, it may be not necessary to perform the operation 401, and the operation 402 may be directly performed.

At block 402, the SF returns the sensing assistance data (i.e., the first information) to the UE. The sensing assistance data includes truncation-related information, to increase the SequenceID (sequence ID) in a range of {0... 2^32-1}.

The truncation-related information may be used to indicate at least one of the following: a truncation starting bit in the shared key; a truncation ending bit in the shared key; the number of truncated bits from the shared key; or the truncation rule of the shared key. The truncation-related information may be used to determine 32 bits of the truncation key KeNB, such as the bits {0.. 31}, or the bits {97.. 128}, or any 32 bits. For example, it may be represented as ${n}_{ID , seq}^{PRS} = Truncate 32 \left[KeNB\right]$, where the KeNB may be replaced with the existing key shared between the base station and the UE, such as any one of NH, K_{RRCINT}, K_{RRCENC}, K_{UP INT}, K_{UPENC}, etc.; alternatively, the KeNB may be replaced with the key shared between the UE and the core network device, such as any one of K_{AMF}, K_{SEAF}, K_{AKMA}, K_{AF}, K_{sNAF}, K_{SF}, etc., which will not be exhaustively listed and repeated herein. In such way, the range of SequenceID is {0... 2^32-1}.

Herein, the SF is a sensing server, and the message(s) transmitted between the UE and the SF may be forwarded through the physical interface between the AMF and the base station shown in FIG. 4.

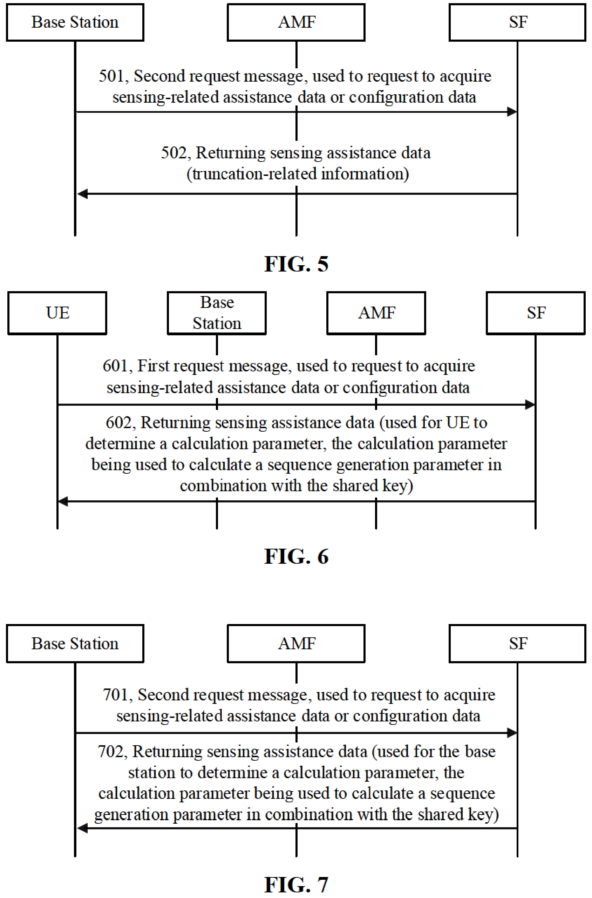

In a second embodiment, the first device is a base station, and referring to FIG. 5:

At block 501, the base station sends a second request message to the SF. The second request message is used to request to acquire the first information, that is, the sensing-related assistance data or configuration data, which is primarily the assistance data (NR-DL-PRS-AssistanceData) required for the subsequent generation and transmission of the downlink PRS by the base station. Such operation may be optional, that is, the operation 502 may be directly performed without the operation 501.

At block 502, the SF returns the sensing assistance data (i.e., the first information) to the base station. The sensing assistance data includes truncation-related information, to increase the SequenceID (sequence ID) in a range of {0... 2³²⁻¹}. The detailed description of the operation may be similar to that of the foregoing operation 402, except that the UE in the operation 402 is replaced with the base station in the embodiment, which will not be repeated in detail herein. It should be noted that, in the operation, if the KeNB is replaced with the key shared by the UE and the core network device, such as any one of K_{AMF}, K_{SEAF}, K_{AKMA}, K_{AF}, K_{sNAF}, K_{SF}, etc., the base station may acquire the corresponding key in advance, and the manner of acquiring the key by the base station is not limited herein.

Herein, the message(s) between the base station and the SF may be forwarded through the physical interface of the AMF.

On the basis of the first embodiment and the second embodiment, the sensing process completed by the UE and the base station may include that: the base station modulates the sensing signaling by using the previously acquired Sequence ID random number. The modulation process may be consistent with that in the existing technologies. The base station sends the downlink PRS sensing signal; the sensing target reflects the sensing signal; and the UE demodulate the sensing signaling by using the previously acquired Sequence ID random number. The demodulation process may be consistent with that in the existing technologies. The UE returns the sensing data to the AMF, and the message may be forwarded by the base station.

In a third embodiment, the first device is a UE, the sequence Id parameter is generated by using the key derivation manner; and referring to FIG. 6:

The operation 601 may be the same as the operation 401, which will not be repeated in detail herein. Such operation may be optional, that is, the operation 602 may be performed directly without the operation 601.

At block 602, the SF returns the sensing assistance data (i.e., the first information) to the UE. The sensing assistance data is used for the UE to determine the calculation parameter, and the calculation parameter is used to calculate the sequence generation parameter (sequence Id) in conjunction with the shared key. In the embodiment, ${n}_{ID , seq}^{PRS} = Ksf mod {2}^{31}$, and the range of SequenceID is {0... 2^32-1}. Herein, Ksf may be replaced with any one of the types of keys mentioned in the foregoing embodiments. For example, Ksf may be replaced with any one of KeNB, NH, K_{RRCINT}, K_{RRCENC}, K_{UP INT}, K_{UPENC}, etc.; alternatively, Ksf may be replaced with any one of K_{AMF}, K_{SEAF}, K_{AKMA}, K_{AF}, K_{sNAF}, K_{SF}, etc., which will not be exhaustively listed and repeated herein.

In a fourth embodiment, the first device is a base station, the sequence Id parameter is generated by using the key derivation manner; and referring to FIG. 7:

The operation 701 may be the same as the operation 501, which will not be repeated in detail herein. Such operation may be optional, that is, the operation 702 may be performed directly without the operation 701.

At block 702, the SF returns the sensing assistance data (i.e., the first information) to the base station. The sensing assistance data is used for the base station to determine the calculation parameter, and the calculation parameter is used to calculate the sequence generation parameter (sequence Id) in combination with the shared key. In the embodiment, ${n}_{ID , seq}^{PRS} = Ksf mod {2}^{31}$, and the range of SequenceID is {0... 2^32-1}. Herein, Ksf may be replaced with any one of the types of keys mentioned in the foregoing embodiments. For example, Ksf may be replaced with any one of KeNB, NH, K_{RRCINT}, K_{RRCENC}, K_{UP INT}, K_{UPENC}, etc., alternatively, Ksf may be replaced with any one of K_{AMF}, K_{SEAF}, K_{AKMA}, K_{AF}, K_{sNAF}, K_{SF}, etc., which will not be exhaustively listed and repeated herein. It should be noted that, in the operation, if the Ksf is replaced with the key shared by the UE and the core network device, such as any one of K_{AMF}, K_{SEAF}, K_{AKMA}, K_{AF}, K_{sNAF}, K_{SF}, etc., the base station may acquire the corresponding key in advance, and the manner of acquiring the key by the base station is not limited herein.

According to the technical solutions provided in the embodiments, by sending the configuration information to the first device, the first device may be enabled to determine the manner of generating the sequence generation parameter of the downlink sensing signal by using the key shared by the first device and the second device. In such way, the parameter range of the sequence generation parameter of the downlink sensing signal can be changed, and only the first device and the second device can know the specific content of the sequence generation parameter, and other devices cannot acquire such parameter; additionally, only the receiving end of the first device and the second device can correctly receive and measure the downlink sensing signal generated based on the sequence generation parameter, thereby improving the security of the downlink sensing signal itself and ensuring the security of the sensing scenario.

Furthermore, according to the technical solutions provided by the embodiments, the selectable range of parameters for generating the PRS sequence can be increased, but the generation mode of the sequence is not changed, which is well compatible with the existing protocol(s). By increasing the selectable range of parameters for generating the PRS sequence, the entire security space of the PRS signal can be increased, and the security space can reach 128 bits. Compared to using the random number, generating the sequence Id parameter by using key derivation manner can omit the transmission of the random number in the high-layer PRS configuration message(s), and the existing keys can be directly used, which is more efficient.

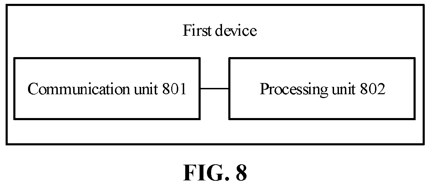

FIG. 8 is a schematic diagram of a composition and structure of a first device according to an embodiment of the present disclosure. The first device includes a communication unit 801.

The communication unit 801 is configured to receive first information. Here, the first information is used to determine a manner of acquiring a sequence generation parameter corresponding to a downlink sensing signal based on a shared key, and the shared key is shared by the first device and a second device.

As shown in FIG. 8, the first device further includes a processing unit 802.

The processing unit 802 is configured to: truncate a plurality of bits from the shared key based on the first information, and generate the sequence generation parameter corresponding to the downlink sensing signal based on the plurality of bits.

The first information is used to indicate at least one of the following: a truncation starting bit in the shared key; a truncation ending bit in the shared key; the number of truncated bits from the shared key; or, a truncation rule of the shared key.

The processing unit is configured to: determine a calculation parameter based on the first information, and calculate the sequence generation parameter corresponding to the downlink sensing signal based on the shared key and the calculation parameter.

The first information includes one of the following: the calculation parameter; and range-related information corresponding to the sequence generation parameter, where the range-related information corresponding to the sequence generation parameter is used to determine the calculation parameter.

The range-related information corresponding to the sequence generation parameter includes one of the following: a value range corresponding to the sequence generation parameter; and a value range indicator corresponding to the sequence generation parameter.

The first information further includes an identification of the shared key.

The shared key is one of the following: a first key shared by the first device and the second device, wherein the first key comprises one of an access stratum key, an access stratum security base key, a next hop (NH) key, and a physical layer key; and calculated based on the first key.

The communication unit is further configured to receive the shared key.

The shared key is calculated based on a second key shared by the first device and a core network device.

The first device is an access network device that sends the downlink sensing signal; and the second device is a terminal that receives an echo signal of the downlink sensing signal.

The first device is a terminal that receives an echo signal of the downlink sensing signal; and the second device is an access network device that sends the downlink sensing signal.

The device according to the embodiments of the present disclosure can realize the corresponding functions of each device in the aforementioned communication method embodiment. The corresponding processes, functions, implementations, and beneficial effects of each module (sub-module, unit, component, etc.) in the device can be described in the corresponding description in the aforementioned method embodiments, which will not be repeated in detail herein. It should be noted that the functions described with respect to various modules (sub-modules, units, components, etc.) in the device of the embodiments of the present disclosure may be implemented by different modules (sub-modules, units, components, etc.), or may be implemented by the same module (sub-module, unit, component, etc.).

It should be understood that, in various embodiments of the present disclosure, the sequence numbers of the aforementioned processes do not mean the sequence of execution. The sequence of execution of each process shall be determined by its function and internal logic, and shall not constitute any limitation on the implementation of the embodiments of the present disclosure.

For convenience and conciseness of the description, those skilled in the art can clearly understand that, the specific working processes of the systems, devices, and units described above may make reference to the corresponding processes in the aforementioned method embodiments, which will not be repeated in detail herein.

The foregoing merely describes specific implementations of the present disclosure, but the scope of protection of the present disclosure is not limited thereto. Any person skilled in the art can easily conceive of modifications or substitutions within the technical scope disclosed in the present disclosure, and shall fall within the scope of protection of the present disclosure. Therefore, the scope of protection of the present disclosure shall be subject to the scope of protection of the claims.

## Claims

1. A communication method, performed by a first device, comprising:
receiving first information, the first information being used to determine a manner of acquiring a sequence generation parameter corresponding to a downlink sensing signal based on a shared key, and the shared key being shared by the first device and a second device.

2. The method of claim 1, further comprising:
truncating a plurality of bits from the shared key based on the first information, and generating the sequence generation parameter corresponding to the downlink sensing signal based on the plurality of bits.

3. The method of claim 2, wherein the first information is used to indicate at least one of the following:
a truncation starting bit in the shared key;
a truncation ending bit in the shared key;
a number of truncated bits from the shared key; or,
a truncation rule of the shared key.

4. The method of claim 1, further comprising:
determining a calculation parameter based on the first information, and calculating the sequence generation parameter corresponding to the downlink sensing signal based on the shared key and the calculation parameter.

5. The method of claim 4, wherein the first information comprises one of the following:
the calculation parameter;
range-related information corresponding to the sequence generation parameter, the range-related information corresponding to the sequence generation parameter being used to determine the calculation parameter.

6. The method of claim 5, wherein the range-related information corresponding to the sequence generation parameter comprises one of the following: a value range corresponding to the sequence generation parameter; and a value range indicator corresponding to the sequence generation parameter.

7. The method of any one of claims 1 to 6, wherein the first information further comprises an identification of the shared key.

8. The method of any one of claims 1 to 7, wherein the shared key is one of the following:
a first key shared by the first device and the second device, wherein the first key comprises one of an access stratum key, an access stratum security base key, a next hop (NH) key, and a physical layer key;
calculated based on the first key.

9. The method of any one of claims 1 to 7, further comprising:
receiving the shared key.

10. The method of any one of claims 1 to 7, wherein the shared key is calculated based on a second key shared by the first device and a core network device.

11. The method of any one of claims 1 to 9, wherein the first device is an access network device that sends the downlink sensing signal; and the second device is a terminal that receives an echo signal of the downlink sensing signal.

12. The method of any one of claims 1 to 10, wherein the first device is a terminal that receives an echo signal of the downlink sensing signal; and the second device is an access network device that sends the downlink sensing signal.

13. A first device, comprising:
a communication unit, configured to receive first information, the first information being used to determine a manner of acquiring a sequence generation parameter corresponding to a downlink sensing signal based on a shared key, and the shared key being shared by the first device and a second device.

14. The first device of claim 13, further comprising a processing unit, wherein the processing unit is configured to: truncate a plurality of bits from the shared key based on the first information, and generate the sequence generation parameter corresponding to the downlink sensing signal based on the plurality of bits.

15. The first device of claim 14, wherein the first information is used to indicate at least one of the following: a truncation starting bit in the shared key; a truncation ending bit in the shared key; a number of truncated bits from the shared key; or, a truncation rule of the shared key.

16. The first device of claim 13, further comprising a processing unit, wherein the processing unit is configured to: determine a calculation parameter based on the first information, and calculate the sequence generation parameter corresponding to the downlink sensing signal based on the shared key and the calculation parameter.

17. The first device of claim 16, wherein the first information comprises one of the following: the calculation parameter; and range-related information corresponding to the sequence generation parameter, wherein the range-related information corresponding to the sequence generation parameter is used to determine the calculation parameter.

18. The first device of claim 17, wherein the range-related information corresponding to the sequence generation parameter comprises one of the following: a value range corresponding to the sequence generation parameter; and a value range indicator corresponding to the sequence generation parameter.

19. The first device of any one of claims 13 to 18, wherein the first information further comprises an identification of the shared key.

20. The first device of any one of claims 13 to 19, wherein the shared key is one of the following: a first key shared by the first device and the second device, wherein the first key comprises one of an access stratum key, an access stratum security base key, a next hop (NH) key, and a physical layer key; and calculated based on the first key.

21. The first device of any one of claims 13 to 19, wherein the communication unit is further configured to receive the shared key.

22. The first device of any one of claims 13 to 19, wherein the shared key is calculated based on a second key shared by the first device and a core network device.

23. The first device of any one of claims 13 to 21, wherein the first device is an access network device that sends the downlink sensing signal; and the second device is a terminal that receives an echo signal of the downlink sensing signal.

24. The first device of any one of claims 13 to 22, wherein the first device is a terminal that receives an echo signal of the downlink sensing signal; and the second device is an access network device that sends the downlink sensing signal.
